# FASCICULE DE BREVET EUROPEEN

(11) **EP 4 439 031 B1**
(45) Date de publication et mention de la délivrance du brevet: **20.05.2026**
(21) Numéro de dépôt: 24166714.6
(22) Date de dépôt: 27.03.2024
(51) Int. Cl.: G01L 7/16, F16K 37/00, G01L 9/14, G01L 19/06, G01M 3/02, G01M 3/04

(54) **INDICATEUR POUR INDIQUER LA SURVENANCE D'UNE FUITE DE FLUIDE PRESSURISÉ DANS UNE CHAMBRE D ÉVENT D'UN APPAREIL À FLUIDE PRESSURISÉ**
ANZEIGER ZUR ANZEIGE DER ÜBERBELEGUNG EINES UNTER DRUCK STEHENDEN FLÜSSIGKEITSLECKS IN EINER ENTLÜFTUNGSKAMMER EINES DRUCKFLÜSSIGKEITSGERÄTS
INDICATOR FOR INDICATING THE OCCURRENCE OF A PRESSURIZED FLUID LEAK IN A VENT CHAMBER OF A PRESSURIZED FLUID APPARATUS

(30) Priorité: 28.03.2023 FR 2302951
(43) Date de publication de la demande: 02.10.2024
(73) Titulaire: EXEL INDUSTRIES, 51200 Epernay (FR)
(72) Inventeur: VANZETTO, Denis, 51200 EPERNAY (FR)
(74) Mandataire: Lavoix

(56) Documents cités:
- EP-A1- 1 219 942
- EP-A1- 3 301 423
- EP-A1- 3 785 802
- FR-A1- 3 100 302
- GB-A- 2 575 991

## Description

La présente invention concerne un indicateur pour indiquer la survenance d'une fuite de fluide pressurisé dans une chambre d'évent d'un appareil à fluide pressurisé et un appareil à fluide pressurisé comprenant un tel indicateur.

EP3301423A1, GB2575991A et EP1219942A1 décrivent des indicateurs de surpression.

EP3785802A1 décrit une vanne pour un système d'application de produit de revêtement.

FR3100302A1 concerne un système d'application de produit de revêtement, équipée d'une vanne. La vanne comprend un corps, avec un orifice central interne et une chambre, et un piston, formant une tige montée dans l'orifice interne et une tête de piston située dans la chambre. Une partie de la chambre de la vanne est remplie d'un fluide de commande sous pression de manière à obtenir, à l'encontre de l'effort d'un ressort logé dans le corps, un déplacement du piston par rapport au corps. La vanne est montée dans un alésage du système d'application, dans lequel du produit de revêtement sous pression circule et dans lequel le déplacement de la tige autorise ou interrompt cette circulation de produit. La vanne comprend aussi un dispositif d'étanchéité logé dans le corps autour de la tige de piston, d'un côté de la vanne où la tige de piston se prolonge hors du corps.

La vanne comprend un conduit d'évent, prévu dans la tige du piston et communicant avec l'orifice central interne, par-delà le dispositif d'étanchéité vis-à-vis de l'alésage, le conduit d'évent communiquant avec l'extérieur du système d'application. En cas de fuite de produit de revêtement au travers du dispositif d'étanchéité, le produit de revêtement ayant fuit est reçu dans le conduit d'évent et dévié vers l'extérieur de la vanne, par différence de pression avec l'extérieur du système. Cela limite les dégâts occasionnés par la fuite, en ce que la fuite n'affecte que la vanne, laquelle peut être démontée et réparée ou remplacée, sans endommager le reste du système d'application.

Lorsque la fuite concerne un produit de revêtement, un solvant ou un autre liquide, la fuite peut généralement être détectée par le technicien, qui peut constater visuellement la présence de la fuite sur la machine. Toutefois, la détection de la fuite n'intervient qu'après une durée relativement longue où le liquide a colmaté, corrodé et/ou durablement endommagé la vanne, en ce que c'est le fait que la vanne est devenue inopérante qui incite le technicien à rechercher une cause à la panne. Alors, la vanne est particulièrement difficile à réparer, et est généralement remplacée par une vanne neuve. Dans certains cas, la fuite est détectée si tard que le produit a envahi d'autres parties de la machine, notamment lorsque le débouché du conduit d'évent est dissimulé sous un capot.

Lorsque la fuite concerne un fluide invisible ou volatile, par exemple une fuite d'air, le technicien ne détecte généralement pas la fuite. En effet, en fonctionnement, le bruit de fonctionnement de la machine peut couvrir le bruit de la fuite elle-même. Lors d'une opération de maintenance, la fuite peut ne pas être détectée car les fluides et les énergies alimentant la machine sont coupés. La fuite est généralement détectée tardivement, lorsque l'on constate une perte d'efficacité significative de la machine sure laquelle la vanne est équipée.

C'est à ces inconvénients qu'entend remédier l'invention en proposant une solution pour détecter de façon précoce et certaine la survenance d'une fuite de fluide dans une chambre d'évent d'un appareil à fluide pressurisé.

L'invention a pour objet un indicateur, pour indiquer la survenance d'une fuite de fluide pressurisé dans une chambre d'évent d'un appareil à fluide pressurisé. L'indicateur comprend un tube de support, comprenant : une ouverture de connexion, configurée pour être fluidiquement connectée à la chambre d'évent de l'appareil à fluide pressurisé, et une ouverture externe, configurée pour déboucher sur un extérieur vis-à-vis de l'appareil à fluide pressurisé. L'indicateur comprend en outre un témoin, agencé dans le tube de support et mobile par rapport au tube de support, entre une position initiale et une position de signalement, sous l'effet d'une surpression survenant à l'ouverture de connexion, comparativement à l'ouverture externe, le témoin étant positionné plus loin de l'ouverture de connexion dans la position de signalement que dans la position initiale, pour indiquer la survenance de la fuite de fluide pressurisé dans la chambre d'évent lorsque le témoin est en position de signalement.

L'indicateur comprend des éléments de verrouillage, pour verrouiller mécaniquement le témoin en position par rapport au tube de support, lorsque le témoin est en position de signalement.

Les éléments de verrouillage comprennent une portion de paroi interne du tube de support et une portion de paroi externe du témoin, la portion de paroi interne et la portion de paroi externe étant conformées de sorte que la portion de paroi externe soit accueillie en engagement conique dans la portion de paroi interne lorsque le témoin est dans la position de signalement, pour ainsi verrouiller le témoin dans la position de signalement.

Grâce à l'invention, un technicien peut constater immédiatement et de façon fiable qu'une fuite est survenue dans la chambre d'évent, en observant la position du témoin, quel que soit le fluide pressurisé concerné. Par « chambre d'évent », on entend un volume interne de l'appareil à fluide pressurisé, constitué d'une ou plusieurs chambres et/ou éventuellement d'un ou plusieurs conduits, ce volume interne étant spécialement conçu pour servir de réceptacle à la fuite de fluide pressurisé dans l'appareil, le volume interne étant adjacent à une paroi ou à un organe, notamment un dispositif d'étanchéité, dont on sait qu'il est particulièrement sujet aux défaillances, intempestives ou liées à la durée de vie de parties de l'appareil à fluide pressurisé, susceptibles de causer une fuite de fluide pressurisé. La mise en œuvre de l'indicateur permet une détection précoce de la fuite dans la chambre d'évent.

L'invention s'applique particulièrement, mais pas seulement, au cas où le fluide constitue un produit de revêtement et/ou un fluide de commande, notamment de l'huile ou de l'air et où l'appareil est une vanne.

Selon des aspects avantageux mais non obligatoires de l'invention, l'invention peut incorporer une ou plusieurs des caractéristiques suivantes, prises selon toute combinaison techniquement admissible.

De préférence, le témoin comprend une extrémité de signalement qui : dépasse hors de l'ouverture externe lorsque le témoin est dans la position de signalement, pour indiquer la survenance de la fuite ; et est au moins partiellement escamotée dans l'ouverture externe lorsque le témoin est dans la position initiale, pour indiquer une absence de fuite de fluide pressurisé dans la chambre d'évent.

De préférence, le témoin est conformé pour obturer le tube de support et ainsi empêcher une fuite de fluide pressurisé depuis l'ouverture de connexion jusqu'à l'ouverture externe, au moins lorsque le témoin est dans la position de signalement, de préférence aussi lorsque le témoin est dans la position initiale.

De préférence, le tube de support comprend une surface axiale primaire tournée en direction de l'ouverture de connexion et disposée à l'intérieur du le tube de support, entre l'ouverture externe et l'ouverture de connexion. De préférence, le témoin comprend une surface axiale secondaire tournée en direction de la surface axiale primaire, pour que le témoin vienne en butée contre le tube de support lorsque le témoin est en position de signalement, par mise en butée de la surface axiale secondaire contre la surface axiale primaire.

De préférence, le tube de support comprend un moyen de fixation primaire, de préférence un filetage extérieur, pour que l'indicateur puisse être fixement reçu dans un orifice de réception de l'appareil à fluide pressurisé.

L'invention a également pour objet un appareil à fluide pressurisé, comprenant : l'indicateur tel que décrit ci-avant, l'ouverture externe de l'indicateur débouchant sur l'extérieur ; la chambre d'évent, l'ouverture de connexion de l'indicateur étant fluidiquement connectée à la chambre d'évent ; au moins une chambre de fluide pressurisé ; et au moins un dispositif d'étanchéité, séparant fluidiquement la chambre d'évent vis-à-vis de ladite au moins une chambre de fluide pressurisé.

De préférence, l'appareil à fluide pressurisé comprend une vanne, fluidiquement connectée avec la chambre d'évent ou formant tout ou partie de la chambre d'évent, et comprenant : un corps, présentant une extrémité distale de corps et formant un conduit central, coaxialement traversé par un axe central, le conduit central présentant une extrémité distale de conduit qui débouche à l'extrémité distale de corps ; et un piston, reçu dans le conduit central et configuré pour coulisser par rapport au corps suivant l'axe central et émergeant hors du conduit central à l'extrémité distale de conduit.

De préférence, le conduit central comprend une chambre intermédiaire qui est fluidiquement connectée à la chambre d'évent ou qui forme tout ou partie de la chambre d'évent. De préférence, ledit au moins un dispositif d'étanchéité comprend au moins un dispositif d'étanchéité de piston, appartenant à la vanne, le dispositif d'étanchéité de piston reliant radialement le piston au corps, de sorte que le dispositif d'étanchéité de piston sépare la chambre intermédiaire vis-à-vis de ladite au moins une chambre de fluide pressurisé.

De préférence, l'appareil à fluide pressurisé comprend une base, comprenant un alésage dans lequel le corps est reçu et est fixement attaché, pour former : ladite au moins une chambre de fluide pressurisé, délimitée par l'alésage et la vanne, et une chambre périphérique, délimitée par l'alésage et le corps, radialement vis-à-vis de l'axe central, la chambre périphérique étant adjacente à la chambre de fluide pressurisé et étant fluidiquement connectée à la chambre d'évent ou formant tout ou partie de la chambre d'évent. De préférence, ledit au moins un dispositif d'étanchéité comprend un dispositif d'étanchéité de corps, interposé entre le corps et la base, de sorte que le dispositif d'étanchéité de corps sépare la chambre périphérique vis-à-vis de ladite au moins une chambre de fluide pressurisé.

De préférence, l'indicateur est monté dans la base, avec le tube de support fixement attaché à la base.

De préférence, l'indicateur est monté sur la vanne, avec le tube de support fixement attaché à la vanne.

De préférence, l'indicateur est monté sur le piston, avec le tube de support fixement attaché à une embase proximale appartenant au piston, l'embase proximale étant opposée à l'extrémité distale de corps, de sorte que l'indicateur soit visible depuis l'extérieur pour au moins une position du piston par rapport au corps et de sorte que la position de l'indicateur par rapport au corps reflète la position du piston.

De préférence, l'appareil à fluide pressurisé est un appareil d'application de produit de revêtement. De préférence, le fluide pressurisé comprend le produit de revêtement et/ou un fluide de commande de vanne.

De préférence, l'indicateur comprend un capteur dont un état reflète la position courante du témoin par rapport au tube de support. De préférence, l'appareil à fluide pressurisé comprend une unité électronique de surveillance à laquelle le capteur est relié, et qui est configurée pour émettre une alerte à l'attention d'une personne lorsque l'état du capteur reflète que le témoin est en position de signalement.

L'invention sera mieux comprise et d'autres avantages de celle-ci apparaîtront plus clairement à la lumière de la description suivante d'exemples conformes à son principe, en référence aux dessins suivants.
[Fig 1] La figure 1 est une vue en coupe longitudinale d'un appareil à fluide pressurisé comportant un indicateur et une vanne, selon un premier mode de réalisation de l'invention, la vanne étant dans une configuration fermée et un témoin de l'indicateur étant dans une position initiale.
[Fig 2] La figure 2 est une vue similaire à celle de la figure 1, où la vanne est dans une configuration ouverte et le témoin est dans la position initiale.
[Fig 3] La figure 3 est une vue similaire à celle des figures précédentes, où la vanne est dans la configuration fermée et le témoin est dans une position de signalement.
[Fig 4] La figure 4 est une vue en coupe longitudinale d'un appareil à fluide pressurisé comportant un indicateur et une vanne, selon un deuxième mode de réalisation de l'invention, la vanne étant dans une configuration ouverte et un témoin de l'indicateur étant dans une position initiale.

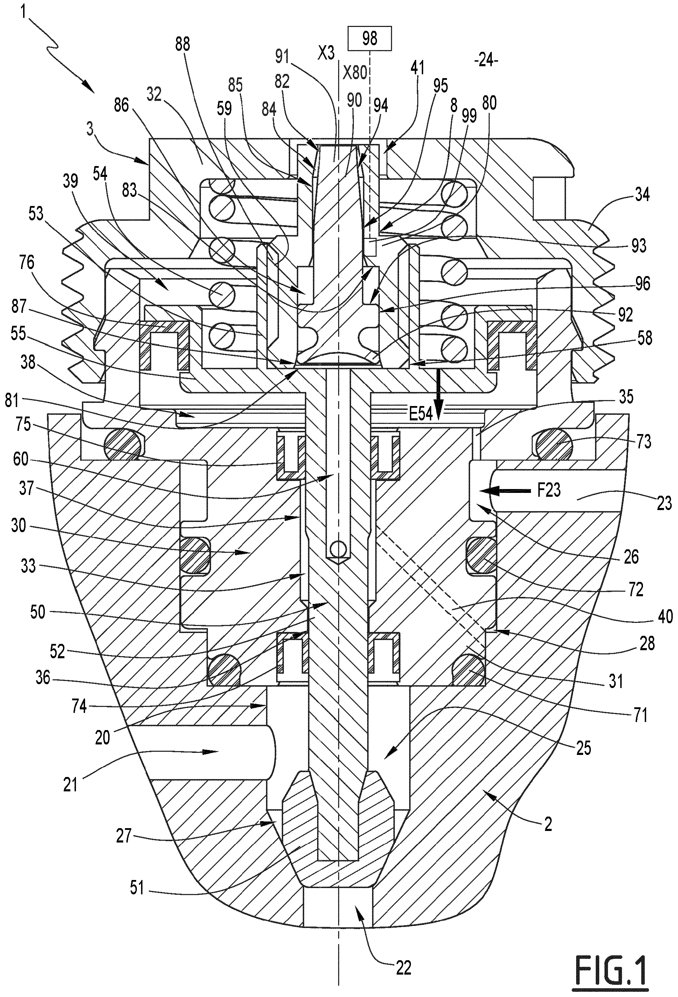

Les figures 1 à 4 montrent, dans le contexte d'appareil à fluide pressurisé, un indicateur 8. L'indicateur 8 vise à indiquer la survenance d'une fuite de fluide pressurisé dans une chambre d'évent de l'appareil à fluide pressurisé, tels que les appareils montrés aux figures 1-4. Autrement dit, l'indicateur 8 a pour but d'alerter un technicien qu'une fuite est survenue dans la chambre d'évent.

L'indicateur 8 comprend un tube de support 80 et un témoin 90.

Le tube de support 80 est de forme tubulaire, suivant un axe principal X80 traversant le tube de support 80. Le tube de support 80 comprend une ouverture 81, dite « ouverture de connexion » et une ouverture 82, dite « ouverture externe », qui sont opposées et traversées par l'axe X80. Les ouvertures 81 et 82 sont reliées par un conduit interne délimité par le tube suivant l'axe X80. L'ouverture de connexion 81 est configurée pour être fluidiquement connectée à la chambre d'évent de l'appareil à fluide pressurisé. L'ouverture externe 82 est configurée pour déboucher sur un extérieur vis-à-vis de l'appareil à fluide pressurisé, c'est-à-dire à l'air libre.

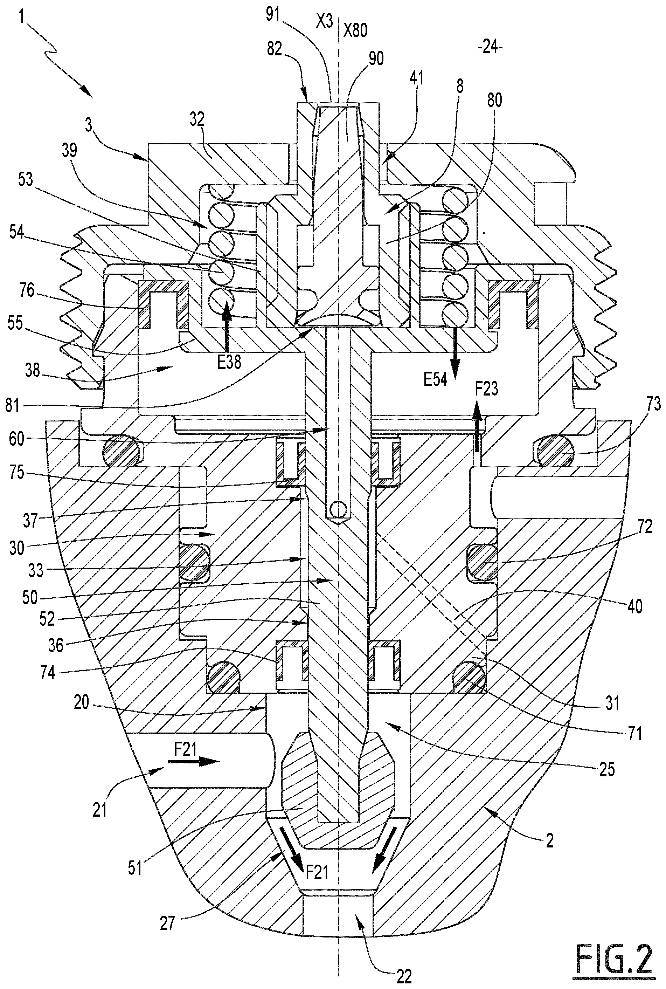

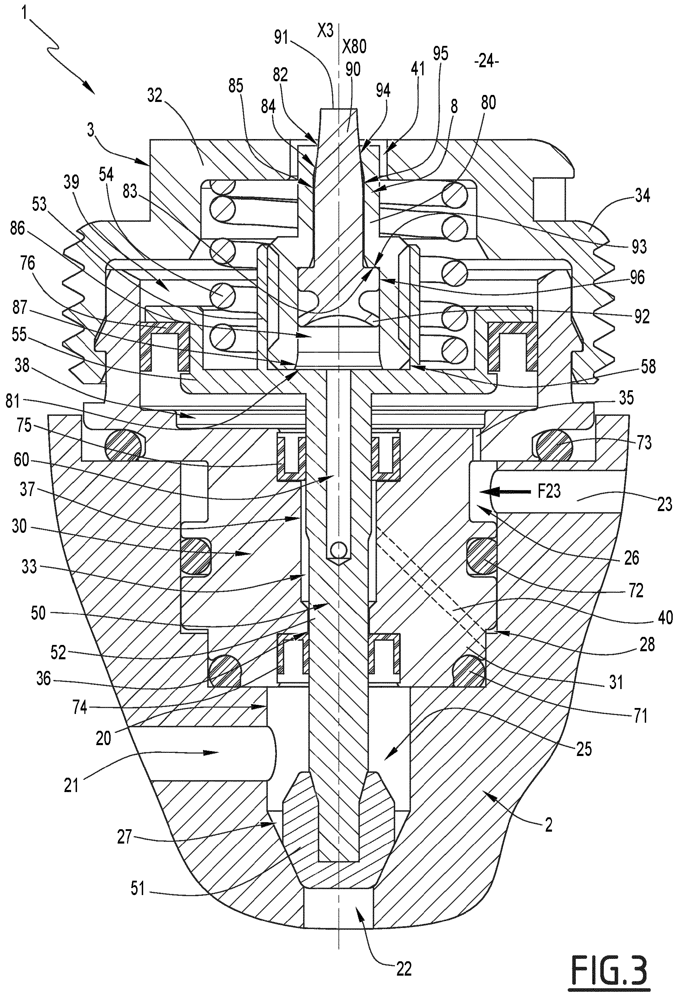

Le témoin 90 est agencé à l'intérieur du tube de support 80, en étant reçu dans le conduit intérieur. Le témoin 90 est mobile en translation suivant l'axe X80, par rapport au tube 80, entre une position initiale, montrée sur les figures 1 et 2, et une position de signalement, montrée sur la figure 3. Le tube 80 guide le témoin 90 en coulissement suivant l'axe X80 pour assurer cette mobilité. De la position initiale à la position de signalement, le témoin 90 s'est déplacé suivant l'axe X80, dans un sens qui va de l'ouverture de connexion 81 à l'ouverture externe 82. Autrement dit, le témoin 90 est positionné plus loin de l'ouverture de connexion 81 dans la position de signalement que dans la position initiale.

Le témoin 90 comprend avantageusement une extrémité de signalement 91 et une extrémité de poussée 92 opposées et traversées par l'axe X80. L'extrémité de signalement 91 est agencée du côté de l'ouverture externe 82 et l'extrémité de poussée 92 est agencée du côté de l'ouverture de connexion 81.

L'extrémité de poussée 92 occupe avantageusement toute la section transversale interne du tube 80 au niveau de l'ouverture de connexion 81. De préférence, comme illustré, l'extrémité de poussée 92 présente une surface en creux tournée vers l'extérieur de l'ouverture de connexion 81. Plus généralement, l'extrémité de poussée 92 et, en général, le témoin 90, est conformé pour être déplacé depuis la position initiale jusqu'à la position de signalement lorsqu'une surpression survient à l'ouverture de connexion 81, comparativement à la pression régnant à l'ouverture externe 82. Cette surpression, occasionnée par une fuite de fluide pressurisée dans la chambre d'évent, pousse le témoin 90 jusqu'à la position de signalement, en prenant appui sur l'extrémité de poussée 92. En pratique, le fluide pressurisé lui-même, ayant fui et envahi la chambre d'évent, peut s'écouler jusqu'à la l'extrémité de poussée 92 pour pousser directement le témoin 90 jusqu'à la position de signalement.

Lorsque le témoin 90 est en position initiale comme montré sur les figures 1 et 2, l'extrémité de signalement 91 est préférentiellement escamotée dans l'ouverture externe 82, ce qui indique au technicien qu'il n'y a pas eu de fuite de fluide pressurisé dans la chambre d'évent. Lorsque le témoin 90 est en position de signalement, l'extrémité de signalement 91 est visible par l'ouverture 82, voire, de préférence, dépasse hors de l'ouverture 82 comme montré sur la figure 3, ce qui indique au technicien la survenance de la fuite de fluide pressurisé dans la chambre d'évent.

De préférence, le tube de support 80 comprend une surface axiale 83 dite « surface axiale primaire », tournée en direction de l'ouverture de connexion 81 et agencée à l'intérieur du le tube de support, entre l'ouverture externe 82 et l'ouverture de connexion 81. En pratique, la surface 83 peut être formée par une réduction de diamètre intérieur du conduit interne du tube 80. La surface 83 est avantageusement annulaire, et s'étend autour de l'axe X80. De façon complémentaire, le témoin 90 comprend avantageusement une surface axiale 93, dite « surface axiale secondaire », tournée en direction de la surface axiale primaire 83 et de l'ouverture externe 82. La surface 93 est par exemple formée sur un épaulement externe 96 du témoin 90. La surface 93 est avantageusement annulaire et s'étend autour de l'axe X80. En position initiale, les surfaces 83 et 93 sont distantes suivant l'axe X80. En position de signalement, les surfaces 83 et 93 viennent en appui l'une contre l'autre suivant l'axe X80. Autrement dit, le témoin 90 vient en butée, suivant l'axe X80, contre le tube de support 80, lorsque le témoin 90 est en position de signalement, par mise en butée de la surface axiale secondaire 93 contre la surface axiale primaire 83. La surpression appliquée sur le témoin 90 ne peut donc pas éjecter le témoin 90 hors du tube 80 via l'ouverture externe 82.

Le conduit interne du tube de support 80 présente une portion de paroi interne 84, qui s'étend à partir de l'ouverture externe 82 en direction de l'ouverture de connexion 81. La portion de paroi interne 84 est tronconique, centrée sur l'axe X80 et convergente en direction de l'ouverture externe 82. De façon complémentaire, le témoin 90 présente une portion de paroi externe 94, qui s'étend à partir de l'extrémité de signalement 91 en direction de l'extrémité de poussée 92. La portion de paroi externe 94 est tronconique, centrée sur l'axe X80 et convergente en direction de l'extrémité de signalement 91. En variante, seulement l'une des portions 84 et 94 est tronconique, alors que l'autre peut avoir une forme différente, par exemple cylindro-conique.

En position initiale, les portions 84 et 94 sont distantes et ne s'opposent donc pas au déplacement du témoin 90 dans le tube 80. En position de signalement, la portion 94 vient en engagement conique dans la portion 84, ce qui verrouille le témoin 90 dans la position de signalement. Autrement dit, par coopération des portions 84 et 94, le témoin 90 se coince en position de signalement. Les portions 84 et 94 constituent donc des éléments de verrouillage appartenant à l'indicateur, pour verrouiller mécaniquement le témoin 90 en position par rapport au tube de support 80, lorsque le témoin 90 est en position de signalement. Une fois la position de signalement atteinte, le témoin 90 ne peut donc pas retourner en position initiale, même si la surpression dans la chambre d'évent est interrompue. On prévoit avantageusement qu'une personne peut remettre le témoin 90 en position initiale en poussant manuellement sur le témoin 90. Cela peut être fait par exemple si l'appareil à fluide pressurisé a été réparé et nettoyé, et qu'il n'y a donc plus de fuite.

De préférence, le tube 80 comprend une surface cylindrique interne 85, centrée sur l'axe X80, qui relie la portion 84 à la surface 83. De préférence, le tube 80 comprend une surface cylindrique interne 86, centrée sur l'axe X84, qui relie la surface 83 à l'ouverture de connexion 81. De préférence, la surface cylindrique 86 est de plus grand diamètre que ne l'est la surface 85. De préférence, le témoin 90 comprend une surface cylindrique externe 95, centrée sur l'axe X80, qui relie la portion 94 à la surface 93 formée par l'épaulement externe 96. L'épaulement 96 est de plus grand diamètre que la surface 95.

De préférence, le coulissement du témoin 90 dans le tube 80 est guidé par coulissement de l'épaulement 96 dans la surface cylindrique interne 86. Le coulissement peut alternativement ou de surcroît être guidé par coulissement de la surface cylindrique externe 95 dans la surface cylindrique interne 85. On peut aussi préférer, comme illustré, qu'un jeu radial soit prévu entre les surfaces 85 et 95.

De surcroit au verrouillage des surfaces 84 et 94, on peut prévoir que le verrouillage soit réalisé par coopération l'extrémité 92 avec la surface cylindrique interne 86. A cette fin, on prévoit par exemple que l'extrémité 92 présente un diamètre ajusté avec celui de la surface 86, pour que l'extrémité 92 adhère et/ou frotte radialement avec la surface 86 lorsque le témoin 90 atteint la position de signalement. De préférence, le conduit interne du tube de support 80 présente une portion de paroi interne 87, qui relie l'ouverture de connexion 81 à la surface cylindrique interne 86, en étant centrée sur l'axe X80 et en convergent en direction de l'ouverture externe 82. En position initiale, l'extrémité 92 du témoin est positionnée dans la portion 87, ce qui ménage un jeu radial entre la portion 87 et l'extrémité 92, de sorte que l'extrémité 92 ne verrouille pas le témoin 90 en position initiale. Lorsque le témoin 90 est déplacé vers la position de signalement, l'extrémité 92 vient au contact radial ajusté de la surface cylindrique interne 86, ce qui verrouille le témoin 90.

De préférence, le témoin 90 est conformé pour obturer le conduit interne du tube de support 80 et ainsi empêcher une fuite de fluide pressurisé au travers du tube 80, de l'ouverture de connexion 81 jusqu'à l'ouverture externe 82. Cette obturation est préférentiellement obtenue lorsque le témoin 90 est dans la position de signalement. A cette fin, comme montré sur la figure 3, on peut prévoir que le témoin 90 bouche le conduit interne du tube 80 au moins pour la position de signalement. De préférence, le témoin 90 obture le tube 80 grâce à un engagement radial de l'extrémité 92 avec la surface cylindrique interne 86 lorsque le témoin 90 est en position de signalement. Lorsque le témoin 90 est en position initiale, le conduit interne du tube 80 n'est avantageusement pas obturé, en ce que l'extrémité 92 est agencée à hauteur de la portion 87, de sorte qu'un jeu radial est ménagé entre l'extrémité 92 et la portion 87.

Alternativement ou de surcroit, l'obturation peut être obtenu par l'engagement des éléments de verrouillage en position de signalement, notamment l'engagement conique des portions 84 et 94. Toutefois on peut aussi prévoir que l'obturation a lieu également lorsque le témoin 90 est dans la position initiale.

Quelle que soit la solution retenue, on prévoit que cette obturation empêche ou limite une fuite de fluide pressurisé liquide, notamment un produit de revêtement, au travers du tube 80, tout en autorisant une fuite d'air ou de gaz au travers du tube 80. Alternativement, on prévoit que cette obturation autorise une fuite de fluide pressurisé liquide, mais permet de la limiter, pour réduire le risque de formation d'un jet de liquide au travers du tube 80 lors de la survenance de la fuite.

De préférence, le tube 80 comprend un moyen de fixation 88, dit « moyen de fixation primaire », qui est formé sur l'extérieur du tube 80. Par exemple, il s'agit d'un filetage extérieur centré sur l'axe X80. Le filetage extérieur est ici formé à partir de l'ouverture de connexion 81. Le moyen de fixation primaire 88 est configuré pour que l'indicateur 8 puisse être fixement reçu dans un orifice de réception de l'appareil à fluide pressurisé, comportant un moyen de fixation, dit « moyen de fixation secondaire », complémentaire audit moyen de fixation primaire, notamment un filetage intérieur. Le moyen de fixation primaire 88 est configuré pour que le tube 80 soit fixé dans l'orifice de réception de l'appareil à fluide pressurisé avec l'ouverture 81 tourné vers l'intérieur de l'orifice de réception pour être connecté à la chambre d'évent et l'ouverture 82 tournée vers l'extérieur de l'orifice de réception pour donner sur l'extérieur de l'appareil.

En variante, les moyens de fixation primaire et secondaire sont des moyens de d'encliquetage du tube 80 sur l'appareil à fluide pressurisé. D'autres solutions sont possible, par exemple une fixation par collage.

Dans ce qui suit, on décrit l'intégration de l'indicateur 8 à un appareil à fluide pressurisé.

Les figures 1 à 3 représentent une partie d'un appareil 1 pour appliquer un produit de revêtement. Cet appareil 1 est par exemple d'un pulvérisateur de peinture, de vernis, de revêtement anticorrosion, ou de tout autre type de produit de revêtement envisageable. L'appareil 1 est un type particulier d'appareil à fluide pressurisé, mettant en œuvre au moins deux fluides pressurisés, à savoir le produit de revêtement ou d'autres produits utilisés dans le contexte du revêtement, par exemple un solvant ou des constituants du produit de revêtement, et un fluide de commande, par exemple de l'air comprimé. Le produit de revêtement est un fluide pressurisé en ce qu'il est mis en œuvre sous une pression comprise entre 1 et 16 bar, de préférence entre 2 et 10 bar, dans l'appareil 1. Cela s'applique également au cas d'un solvant ou d'un constituant de produit de revêtement. Le fluide de commande est un fluide pressurisé en ce qu'il est mis en œuvre sous une pression comprise entre 1 et 10 bar, de préférence entre 2 et 6 bar dans l'appareil 1.

L'appareil 1 comprend une base 2, une vanne 3 et l'indicateur 8. L'indicateur 8 est particulièrement adapté pour être utilisé avec l'appareil 1 et la vanne 3 décrits ci-après, mais peut aussi être utilisé avec d'autres types d'appareils à fluide pressurisé, tels que des appareils pneumatiques ou hydrauliques, mettant en œuvre un ou plusieurs autres fluides pressurisés que ceux décrits ici.

La base 2 forme un alésage 20, un conduit d'arrivée 21 pour du produit de revêtement, un conduit de refoulement 22 pour le produit de revêtement, et un conduit 23 pour la circulation d'un fluide de commande, les conduits 21, 22 et 23 débouchant dans l'alésage 20. L'alésage 20 débouche sur un extérieur 24 de l'appareil 1, c'est-à-dire est avantageusement ouvert à l'air libre. La vanne 3 est fixement reçue dans l'alésage 20 en obturant l'alésage 20. La vanne 3 et l'alésage 20 définissent un axe central X3 commun. L'axe central X3 traverse l'alésage 20 depuis le débouchant jusqu'au fond de l'alésage. Dans le cas présent, le conduit de refoulement 22 est centré sur l'axe X3. Sauf mention du contraire, les termes tels que « distal », « proximal », « radialement » et « axialement » sont indiqués en référence à l'axe X3.

Les conduits 21 et 22 débouchent dans une zone de l'alésage 20 qui délimite une chambre 25 pour le produit de revêtement, le solvant, ou le constituant de produit de revêtement. La chambre 25 est traversée par l'axe X3 et est préférentiellement située au fond de l'alésage 20. La chambre 25 est donc une chambre de fluide pressurisé, ici le produit de revêtement ou l'un des autres produits susmentionnés. Un siège d'obturation 27 est formé au débouchant du conduit 22 dans la chambre 25, ici coaxialement avec l'axe X3. Comme montré sur la figure 2, un flux F21 de fluide pressurisé, qui est ici du produit de revêtement, mais qui pourrait être un autre fluide tel que de l'air, est destiné à circuler successivement dans le conduit 21, la chambre 25 et le conduit 22, via le siège 27, lorsque la vanne 3 est dans une configuration ouverte. Lorsque la vanne 3 est dans une configuration fermée comme montré sur les figures 1 et 3, le flux F21 est interrompu par la vanne 3, qui obture le siège 27.

Le conduit 23 débouche dans une zone de l'alésage 20 qui délimite une chambre 26, dite « chambre de commande périphérique », qui s'étend entre la chambre 25 et le débouché de l'alésage 20 sur l'extérieur 24. Comme montré sur les figures 1 et 2, un flux F23 de fluide de commande circule entre le conduit 23 et la chambre de commande périphérique 26 pour commander mécaniquement la vanne 3. La chambre 26 est donc une chambre de fluide pressurisé, à savoir le fluide de commande.

La vanne 3 comprend un corps 30. L'axe central X3 est fixe par rapport au corps 30. Suivant l'axe X3, le corps 30 présente une extrémité distale 31 dite « extrémité distale de corps » et une extrémité proximale 32 dite « extrémité proximale de corps », opposées et traversées par l'axe X3.

La vanne 3 est reçue et fixée dans l'alésage 20, par l'intermédiaire du corps 30.

Ainsi reçue, l'extrémité distale de corps 31 est disposée au fond de l'alésage 20 et délimite, avec l'alésage 20 de la base 2, la chambre 25.

L'extrémité proximale de corps 32 est disposée au débouchant de l'alésage 20, en donnant sur l'extérieur 24. La chambre de commande 26 est délimitée radialement entre le corps 30 et l'alésage 20 de la base 2, à hauteur du débouché du conduit 23. Une autre chambre 28, dite « chambre périphérique », est délimité radialement entre le corps 30 et l'alésage 20 de la base 2, axialement entre la chambre 25 et la chambre 26.

Pour être fixé à l'alésage 20, le corps 30 comprend avantageusement un filetage extérieur 34, ici centré sur l'axe X3, ou tout autre moyen de fixation approprié, coopérant avec un moyen de fixation complémentaire appartenant à la base 2, ici un filetage intérieur (non représenté) complémentaire du filetage extérieur 34, formé à l'intérieur de l'alésage 20 à proximité du débouchant. Dans l'exemple, le filetage 34 est disposé à l'extrémité proximale 32. En particulier, le filetage 34 est disposé entre l'extrémité proximale 32 et la chambre de commande 26.

Pour délimiter la chambre 25 de façon étanche au produit de revêtement, la vanne 3 comporte avantageusement un dispositif d'étanchéité 71, dit « dispositif d'étanchéité de corps ». Le dispositif d'étanchéité 71 se présente ici sous la forme d'un joint d'étanchéité statique, par exemple un joint torique, qui entoure le corps 30 sur tout son pourtour, autour de l'axe X30. Le dispositif d'étanchéité 71 est interposé entre le corps 30 et la base 2, ici entre le corps 30 et l'alésage 20, radialement par rapport à l'axe X30. Le dispositif 71 sépare ainsi la chambre 25 du reste de l'alésage 20, pour éviter que du produit de revêtement provenant de la chambre 25 ne s'échappe jusqu'à l'extérieur 24 via le débouchant de l'alésage 20 le long du corps 30. En particulier, le dispositif 71 est axialement disposé entre les conduits 21 et 23. En particulier, le dispositif 71 sépare fluidiquement la chambre 25 de la chambre 28, qui sont adjacentes audit dispositif 71. Le dispositif 71 évite donc une fuite de produit de revêtement de la chambre 25 vers la chambre 28, voir vers la chambre de commande 26.

Pour délimiter la chambre 26 de façon étanche au fluide de commande, la vanne 3 comporte avantageusement un dispositif d'étanchéité 72 et un dispositif d'étanchéité 73. La chambre 26 est axialement délimitée par les dispositifs 72 et 73, en s'étendant entre les dispositifs 72 et 73. La chambre 28 est axialement délimitée par les dispositifs 71 et 72, en s'étendant entre les dispositifs 71 et 72.

Les dispositifs d'étanchéité 72 et 73 se présentent ici chacun sous la forme d'un joint d'étanchéité statique, par exemple un joint torique. Chaque dispositif d'étanchéité 72 et 73 entoure le corps 30 sur tout son pourtour, autour de l'axe X30. Chaque dispositif d'étanchéité 72 et 73 est interposé entre le corps 30 et la base 2, ici entre le corps 30 et l'alésage 20, radialement par rapport à l'axe X30. En particulier, le dispositif d'étanchéité 72, dit « dispositif d'étanchéité de corps », est axialement disposé entre le dispositif d'étanchéité 71 et le dispositif d'étanchéité 73. En particulier, le dispositif d'étanchéité 72 est axialement disposé entre le conduit 23 et le dispositif d'étanchéité 71. Le dispositif 72 sépare fluidiquement la chambre 26 de la chambre 28, qui sont adjacentes au dispositif 72, pour éviter que du fluide de commande provenant de la chambre 26 ne s'échappe jusqu'à la chambre 28, voire jusqu'à la chambre 25, en s'écoulant le long du corps 30. Le dispositif d'étanchéité 73 sépare la chambre 26 du débouchant de l'alésage 20. En particulier, le dispositif 73 est axialement disposé entre le filetage 34 ou moyen de fixation et le conduit 23. Le dispositif 73 évite donc une fuite de fluide de commande de la chambre 26 vers le filetage 34, voire vers l'extérieur 24.

Le corps 30 forme un conduit central 33, qui est coaxial avec l'axe X3 et traversé par l'axe X3 sur toute sa longueur. Le conduit 33 traverse le corps 30 de part en part. Le conduit central 33 débouche à l'extrémité distale de corps 31 et à l'extrémité proximale de corps 32.

A l'extrémité distale de corps 31, le conduit central 33 définit une extrémité distale de conduit 36, qui termine le conduit central 33 et qui débouche à l'extrémité distale de corps 31. A partir de l'extrémité 36, et successivement le long de l'axe X3, le conduit central 33 délimite avantageusement, à l'intérieur du corps 30, une chambre intermédiaire 37, une chambre de commande 38 et une chambre proximale 39. Ces chambres 37, 38 et 39 sont traversées par l'axe X3.

La vanne 3 comprend en outre un piston 50. Le piston 50 est reçu dans le conduit central 33 et est configuré pour coulisser par rapport au corps 30 suivant l'axe X3, en étant guidé par le conduit central 33 pour ce coulissement. Le piston 50 coulisse entre une position de fermeture, pour ainsi obtenir la configuration de fermeture de la vanne 3 montrée sur les figures 1 et 3, et une position d'ouverture, pour ainsi obtenir la configuration d'ouverture de la vanne 3 montrée sur la figure 2.

Le piston 50 comprend avantageusement, successivement suivant l'axe X3, une tête distale 51, une tige 52, une collerette 55 et une embase proximale 53.

Le piston 50 émerge hors du conduit central 33, à l'extrémité distale de conduit 36, dans la chambre 25. La tête 51 du piston 50 est disposée dans la chambre 25, à une extrémité distale du piston 50, et est traversée par l'axe X3. La tête 51, en position d'ouverture du piston 50, est distante du siège 27 pour laisser circuler le flux F21, et, en position de fermeture du piston 50, est en appui axial contre le siège 27 pour obturer le conduit 22 et empêcher la circulation du flux F21.

La tige 52 relie la tête 51 à la collerette 55. La tige 52 est reliée à la tête 51 dans la chambre 25. La tige 52 émerge dans la chambre 25, puis traverse successivement l'extrémité distale de conduit 36 et la chambre intermédiaire 37, et émerge dans la chambre de commande 38. De préférence, le piston 50 est guidé en coulissement par coulissement radial de la tige 52 le long d'une paroi de la chambre intermédiaire 37.

La tige 52 est reliée à la collerette 55 dans la chambre de commande 38. La collerette 55 relie la tige 52 à l'embase proximale 53, en séparant la chambre de commande 38 de la chambre proximale 39.

L'embase proximale 53, formée à une extrémité proximale du piston 50, est opposée à la tête distale 51. L'embase proximale 53 est disposée dans la chambre proximale 39.

La vanne comprend avantageusement des dispositifs d'étanchéité 74, 75 et 76. Chaque dispositif d'étanchéité 74, 75 et 76 s'étend radialement entre le conduit 33 et le piston 50, pour séparer fluidiquement les chambres 25, 37, 38 et 39 les unes des autres et délimiter axialement lesdites chambres 25, 37, 38 et 39. Ces dispositifs d'étanchéité 74, 75 et 76 sont des dispositifs d'étanchéité dynamique, entre le corps 30 fixe et le piston 50 mobile.

Le dispositif d'étanchéité 74, dit « dispositif d'étanchéité de piston », se présente ici sous la forme d'un joint racleur, fixé au corps 30 et glissant le long du piston 50. Toutefois, il pourrait se présenter sous la forme d'un soufflet ou d'un diaphragme, fixé d'une part au corps 30 et d'autre part au piston 50. En tous cas, le dispositif 74 entoure le piston 50 sur tout son pourtour, et est radialement interposé entre le piston 50 et le corps 30, en particulier le conduit 33. En particulier, le dispositif 74 relie radialement le piston 50 à l'extrémité distale de corps 31. Ici, le dispositif 74 est fixé à l'extrémité distale de corps 31, et la tige 52 du piston coulisse à l'intérieur du dispositif 74. Dans le cas d'un soufflet ou d'un diaphragme, on pourrait prévoir que le dispositif 74 soit fixé, d'une part, à l'extrémité distale de corps 31 et, d'autre part, soit à la tige 52, soit à la tête 51. Dans ce cas, on peut en outre prévoir que la tête soit formée par le dispositif 74 lui-même.

Le dispositif d'étanchéité 74 sépare fluidiquement la chambre 25 du conduit 33, qui sont adjacents au dispositif d'étanchéité 74. En particulier, le dispositif d'étanchéité 74 sépare les chambres 25 et 37, qui lui sont adjacentes. Le fluide pressurisé, ici le produit de revêtement, admis dans la chambre 25, est empêché de fuir vers la chambre intermédiaire 37, grâce au dispositif d'étanchéité 74.

Le dispositif d'étanchéité 75, dit « dispositif d'étanchéité de piston », se présente ici sous la forme d'un joint racleur, fixé au corps 30 et glissant le long du piston 50. Le dispositif 75 entoure le piston 50 sur tout son pourtour, et est radialement interposé entre le piston 50 et le corps 30, en particulier le conduit 33. En particulier, le dispositif 75 relie radialement la tige 52 à une partie du conduit 33 située à l'intersection entre la chambre intermédiaire 37 et la chambre de commande 38. Le dispositif d'étanchéité 75 sépare fluidiquement les chambres 37 et 38 du conduit 33, qui sont adjacents au dispositif d'étanchéité 75.

Le dispositif d'étanchéité 76, se présente ici sous la forme d'un joint racleur, fixé au piston 50 et glissant le long du corps 30. Le dispositif 76 entoure le piston 50 sur tout son pourtour, et est radialement interposé entre le piston 50 et le corps 30, en particulier le conduit 33. En particulier, le dispositif 76 relie radialement la collerette 55 à une partie du conduit 33 située à l'intersection entre la chambre de commande 38 et la chambre proximale 39. Le dispositif d'étanchéité 76 sépare fluidiquement les chambres 38 et 39 du conduit 33, qui sont adjacents au dispositif d'étanchéité 76.

La vanne 3 comprend avantageusement un ressort 54, qui exerce un effort de rappel élastique E54 sur le piston 50, ici par l'intermédiaire de l'embase proximale 53, en prenant appui sur le corps 30. L'effort de rappel élastique E54 est ici dirigé parallèlement à l'axe X3. L'effort de rappel élastique E54 tend à déplacer le piston 50 de sa position d'ouverture à sa position de fermeture. De préférence, le ressort 54 est disposé à l'intérieur du corps 30, ici dans la chambre proximale 39, autour du piston 50. Le ressort 54 est par exemple un ressort de compression interposé entre une paroi appartenant à l'extrémité proximale de corps 32 et l'embase 53.

Le conduit 23 et le chambre de commande 26, délimitées par la base 2, sont fluidiquement reliées à la chambre de commande 38 formée à l'intérieur du corps 30. Pour cela, le corps 30 ménage un ou plusieurs conduits 35, reliant les chambres 26 et 38 lorsque la vanne 3 est montée sur la base 2. Le fluide de commande F23 peut donc envahir les chambres de commande 26 et 38, et ainsi exercer un effort de pression E38 sur la collerette 55 par mise en pression de la chambre 38, tendant à déplacer le piston 50 de la position de fermeture à la position d'ouverture, à l'encontre de l'effort E54 développé par le ressort 54. L'application de l'effort E38 par mise sous pression avec du fluide de commande met le piston 50 en position d'ouverture, le relâchement de l'effort E38 par abaissement de la pression autorise le ressort 54 à ramener le piston 50 en position de fermeture, grâce à l'effort E54. L'ouverture et la fermeture peuvent ainsi être commandées. Le fluide de commande reçu dans la chambre de commande 38 est empêché de fuir vers l'extérieur 24 grâce au dispositif d'étanchéité 76, au conduit 33 et au piston 50 délimitant la chambre 38. Le fluide commande reçu dans la chambre de commande 38 est empêché de fuir vers la chambre intermédiaire 37 grâce au dispositif d'étanchéité 75, au conduit 33 et au piston 50 délimitant la chambre 38.

De préférence, la chambre périphérique 28, délimitée par le corps 30 et la base 2, est fluidiquement reliée à la chambre intermédiaire 37, délimitée à l'intérieur du corps 30. Pour cela, le corps 30 ménage un ou plusieurs conduits 40, reliant les chambres 28 et 37 lorsque la vanne 3 est montée sur la base 2. L'un des conduits 40, hors du plan de coupe des figures 1 à 3, est montré par transparence en traits discontinus sur la figure 1.

La chambre intermédiaire 37, la chambre périphérique 28 et le ou les conduits 40 constituent alors ensemble une chambre d'évent. En effet, en cas de défaillance de l'un des dispositifs d'étanchéité 71 ou 74, du fluide pressurisé, à savoir du produit de revêtement, en provenance de la chambre 25, fuit dans la chambre d'évent. En cas de défaillance du dispositif 71, ou de montage incorrect du corps 30 dans l'alésage 20, le produit de revêtement fuit dans la chambre 37, c'est-à-dire dans la chambre d'évent. En cas de défaillance du dispositif 74, le produit de revêtement fuit dans la chambre 28, c'est-à-dire dans la chambre d'évent. De même, en cas de défaillance de l'un des dispositifs d'étanchéité 72 et 75, du fluide pressurisé, à savoir du fluide de commande, en provenance de l'une des chambres de commande 26 et 38 fuit dans la chambre d'évent. En cas de défaillance du dispositif 75, le fluide de commande fuit dans la chambre 37 appartenant à la chambre d'évent. En cas de défaillance du dispositif 72, ou de montage incorrect du corps 30 dans l'alésage 20, le fluide de commande fuit dans la chambre 28 appartenant à la chambre d'évent.

Dans le présent exemple, on prévoit que les chambres 28 et 37 appartiennent à la chambre d'évent. Toutefois, on pourrait prévoir que la chambre d'évent soit formée ailleurs et que la chambre 28 et/ou la chambre 37 y soit fluidiquement connectée.

De préférence, le piston 50 comprend un orifice de réception 58 pour recevoir l'indicateur 8. Ici, l'orifice de réception 58 est formé à l'intérieur de l'embase proximale 53, suivant l'axe X3, en étant ouvert en direction opposée de la tête distale 51. Par exemple, l'orifice 58 est ouvert sur la chambre proximale 39. On prévoit avantageusement que la chambre proximale 39 soit ouverte sur l'extérieur 24, le conduit 33 se terminant par un orifice traversant proximal 41, ménagé au travers de l'extrémité proximale 32 et débouchant sur l'extérieur 24. L'orifice 41 est préférentiellement centré sur l'axe X3.

L'orifice de réception 58 est conçu pour fixement recevoir l'indicateur 8, le tube 80 étant fixement reçu dans l'orifice 58, de sorte à être fixement solidaire du piston 50. L'axe X80 est alors avantageusement coaxial avec l'axe X3. Pour fixer le tube 80, l'orifice de réception 58 porte un moyen de fixation secondaire 59, ici par exemple un filetage intérieur, coopérant avec le moyen de fixation primaire 88 du tube 80. L'ouverture de connexion 81 est dirigée vers le fond de l'orifice de réception 58 alors que l'ouverture externe 82 est dirigée vers l'extérieur 24, et émerge préférentiellement du corps 30, à l'extérieur 24, au travers de l'orifice 41, au moins pour la position de signalement.

L'indicateur 8 étant ainsi fixé à l'embase proximale 53, la position de l'indicateur 8 reflète la position du piston 50. L'indicateur 8 se déplace en même temps que le piston 50, et sert ainsi de témoin de position du piston 50. Pour cela, alors que le piston 50 n'est pas ou peu visible depuis l'extérieur 24, l'indicateur 8 dépasse hors du corps 30, au moins lorsque le piston 50 est en position d'ouverture. La position de l'indicateur 8 par rapport au corps 30 renseigne alors un technicien sur la position actuelle du piston 50. L'indicateur 8 sert donc à indiquer non seulement la survenance éventuelle d'une fuite, mais aussi la position actuelle du piston 50.

Le piston 50 comprend avantageusement un conduit interne 60 traversant, qui relie le fond de l'orifice de réception 58 à la chambre intermédiaire 37, c'est-à-dire à la chambre d'évent. Pour cela, le conduit interne 60 comprend avantageusement une partie coaxiale avec l'axe X3, qui s'étend depuis le fond de l'orifice de réception 58 jusqu'à hauteur de la chambre 37, et une partie radiale, qui débouche d'une part dans la chambre 37 et d'autre part dans la partie coaxiale du conduit 60. Le conduit interne 60 assure donc une connexion fluidique entre l'ouverture de connexion 81 de l'indicateur et la chambre 37, à savoir la chambre d'évent.

En cas de fuite de fluide pressurisé dans la chambre d'évent, la surpression occasionnée est transmise au témoin 90 via le conduit 60, et met le témoin en position de signalement.

En variante, l'orifice de réception 58 aurait pu être formé sur le corps 30, en étant fluidiquement connecté à la chambre d'évent. A cette fin, on prévoit par exemple un conduit interne, reliant l'orifice de réception formé sur le corps 30 et la chambre intermédiaire 37.

Optionnellement, l'indicateur 8 comprend un capteur 99, dont un état, notamment un état électrique, reflète la position courante du témoin 90 par rapport au tube de support 80. Le capteur 99 est montré schématiquement seulement sur la figure 1. L'état du capteur permet de déterminer si le témoin 90 est en position de signalement ou en position initiale. Par exemple, le capteur 99 est un capteur à effet hall, positionné sur le tube de support 80, dont l'état varie en fonction de la position du témoin 90, le témoin 90 embarquant pour cela un élément ferromagnétique auquel le capteur 99 est sensible. En variante, le capteur est un capteur magnétique, pneumatique, optique, ou mécanique. L'appareil 1 comprend alors une unité électronique de surveillance 98, à laquelle le capteur 99 est relié, par exemple de façon filaire ou sans fil. L'unité électronique de surveillance 98 est configurée pour communiquer au technicien la position du témoin 90 détectée par le capteur 99, par exemple sous la forme d'une alerte lorsque le témoin 90 est en position de signalement. L'alerte peut par exemple être émise sous forme sonore, visuelle, ou être transmise au technicien via une interface homme-machine, telle qu'un ordinateur ou un smartphone, à disposition du technicien.

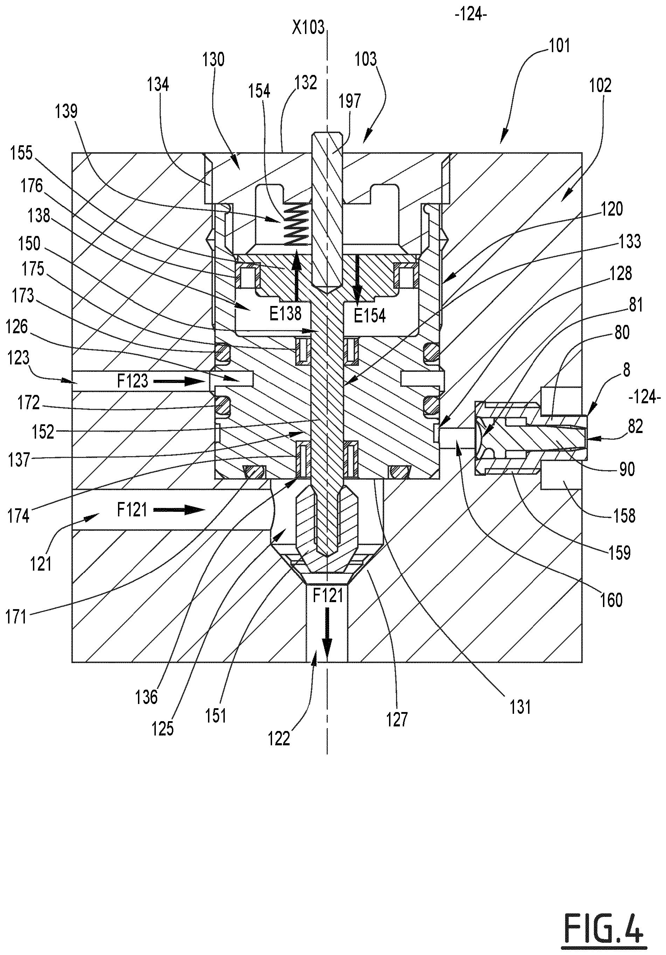

La figure 4 montre un autre mode de réalisation où l'orifice de réception n'est pas monté sur la vanne, mais sur le corps de l'appareil à fluide pressurisé.

Sur la figure 4, les éléments de l'appareil qui correspondent à ceux déjà décrits aux figures 1-3 portent des signes de référence augmentés de 100. Les éléments identiques comportent les mêmes signes de référence. La description de la figure 4 se focalise essentiellement sur les différences entre le mode de réalisation de la figure 4 et celui des figures 1-3. La plupart des éléments communs ne sont donc pas à nouveau décrits en détails.

La figure 4 montre un appareil 101 à fluide pressurisé, avec une base 102, une vanne 103 fonctionnant selon les mêmes principes que pour l'appareil 1, et comprenant le même indicateur 8 que celui des figures 1-3.

La base 102 forme un alésage 120, un conduit d'arrivée 121 pour du produit de revêtement, un conduit de refoulement 122 pour le produit de revêtement, et un conduit 123 pour la circulation d'un fluide de commande, les conduits 121, 122 et 123 débouchant dans l'alésage 120. L'alésage 120 débouche sur un extérieur 124. La vanne 103 est fixement reçue dans l'alésage 120 en obturant l'alésage 120. La vanne 103 et l'alésage 120 définissent un axe central X103 commun.

Les conduits 121 et 122 débouchent dans une zone de l'alésage 120 qui délimite une chambre 125 pour le fluide pressurisé, ici un produit de revêtement. Un siège d'obturation 127 est formé au débouchant du conduit 122 dans la chambre 125. Un flux F121 de fluide pressurisé circuler successivement dans le conduit 121, la chambre 125 et le conduit 122, via le siège 127, lorsque la vanne 103 est dans une configuration ouverte comme montré sur la figure 4. Lorsque la vanne 103 est dans une configuration fermée, le flux F121 est interrompu par la vanne 103, par obturation du siège 127.

Le conduit 123 débouche dans une zone de l'alésage 120 qui délimite une chambre de commande périphérique 126, qui s'étend entre la chambre 125 et le débouché de l'alésage 120 sur l'extérieur 124. Un flux F123 de fluide de commande circule entre le conduit 123 et la chambre 126 pour commander mécaniquement la vanne 103.

La vanne 103 comprend un corps 130. Le corps 130 présente une extrémité distale 131 dite « extrémité distale de corps » et une extrémité proximale 132 dite « extrémité proximale de corps », opposées et traversées par l'axe X103.

La vanne 103 est reçue et fixée dans l'alésage 120, par l'intermédiaire du corps 130, avec l'extrémité distale de corps 131 disposée au fond de l'alésage 120 et délimitant, avec l'alésage 120, la chambre 125.

L'extrémité proximale de corps 132 est disposée au débouchant de l'alésage 120, en donnant sur l'extérieur 124. La chambre de commande 126 est délimitée radialement entre le corps 130 et l'alésage 120, à hauteur du débouché du conduit 123. Une autre chambre 128, dite « chambre périphérique », est délimité radialement entre le corps 130 et l'alésage 120, axialement entre la chambre 125 et la chambre 126.

Pour être fixé à l'alésage 120, le corps 130 comprend avantageusement un filetage extérieur 134, coopérant avec un filetage intérieur complémentaire formé dans l'alésage 120. Le filetage 134 est avantageusement disposé entre l'extrémité proximale 132 et la chambre de commande 126.

Pour délimiter la chambre 125 de façon étanche au produit de revêtement, la vanne 103 comporte avantageusement un dispositif d'étanchéité 171, dit « dispositif d'étanchéité de corps ». Le dispositif d'étanchéité 171 se présente ici sous la forme d'un joint d'étanchéité statique, par exemple un joint torique, qui entoure l'axe X130. Le dispositif d'étanchéité 171 est interposé entre le corps 130 et l'alésage 120, axialement. Le dispositif 171 sépare ainsi la chambre 125 du reste de l'alésage 120. En particulier, le dispositif 171 sépare fluidiquement la chambre 125 de la chambre 128, qui sont adjacentes audit dispositif 171. Le dispositif 171 évite donc une fuite de produit de revêtement de la chambre 125 vers la chambre 128, voir vers la chambre de commande 126.

Pour délimiter la chambre 126 de façon étanche au fluide de commande, la vanne 103 comporte avantageusement un dispositif d'étanchéité 172 et un dispositif d'étanchéité 173. La chambre 126 est axialement délimitée par les dispositifs 172 et 173, en s'étendant entre les dispositifs 172 et 173. La chambre 128 est axialement délimitée par les dispositifs 171 et 172, en s'étendant entre les dispositifs 171 et 172.

Les dispositifs d'étanchéité 172 et 173 se présentent ici chacun sous la forme d'un joint d'étanchéité statique, par exemple un joint torique. Chaque dispositif d'étanchéité 172 et 173 entoure le corps 130 sur tout son pourtour, autour de l'axe X130. Chaque dispositif d'étanchéité 172 et 173 est interposé entre le corps 130 et l'alésage 120. En particulier, le dispositif d'étanchéité 172, dit « dispositif d'étanchéité de corps », est axialement disposé entre le dispositif d'étanchéité 171 et le dispositif d'étanchéité 173. En particulier, le dispositif d'étanchéité 172 est axialement disposé entre le conduit 123 et le dispositif d'étanchéité 171. Le dispositif 172 sépare fluidiquement la chambre 126 de la chambre 128, qui sont adjacentes au dispositif 172, pour éviter que du fluide de commande provenant de la chambre 126 ne s'échappe jusqu'à la chambre 128, voire jusqu'à la chambre 125. Le dispositif d'étanchéité 173 sépare la chambre 126 du débouchant de l'alésage 120. En particulier, le dispositif 173 est axialement disposé entre le filetage 134 et le conduit 123. Le dispositif 173 évite donc une fuite de fluide de commande de la chambre 126 vers l'extérieur 124.

Le corps 130 forme un conduit central 133, qui est coaxial avec l'axe X103 et traverse le corps 130, en débouchant à l'extrémité distale de corps 131.

A l'extrémité distale de corps 131, le conduit central 133 définit une extrémité distale de conduit 136, qui termine le conduit central 133 et qui débouche à l'extrémité distale de corps 131. Le conduit central 133 délimite avantageusement, à l'intérieur du corps 130, une chambre intermédiaire 137, une chambre de commande 138 et une chambre proximale 139.

La vanne 103 comprend en outre un piston 150. Le piston 150 est reçu dans le conduit central 133 et est configuré pour coulisser par rapport au corps 130 suivant l'axe X103, en étant guidé par le conduit central 133 pour ce coulissement. Le piston 150 coulisse entre une position de fermeture, pour ainsi obtenir la configuration de fermeture de la vanne 103, et une position d'ouverture, pour ainsi obtenir la configuration d'ouverture de la vanne 103 montrée sur la figure 4.

Le piston 150 comprend avantageusement, successivement suivant l'axe X103, une tête distale 151, une tige 152, une collerette 155 et une embase proximale.

Le piston 150 émerge hors du conduit central 133, à l'extrémité distale de conduit 136, dans la chambre 125. La tête 151 est disposée dans la chambre 125. En position d'ouverture du piston 150, la tête 151 est distante du siège 127 pour laisser circuler le flux F121. En position de fermeture du piston 150, la tête 151 est en appui axial contre le siège 127 pour obturer le conduit 122 et empêcher la circulation du flux F121.

La tige 152 relie la tête 151 à la collerette 155, au travers de l'extrémité distale de conduit 136, de la chambre intermédiaire 137 de de la chambre de commande 138. De préférence, le piston 150 est guidé en coulissement par coulissement radial de la tige 152 le long d'une paroi d'un conduit formé par la chambre intermédiaire 137 coaxialement avec l'axe X103.

La tige 152 est reliée à la collerette 155 dans la chambre de commande 138. La collerette 155 relie la tige 152 à l'embase proximale, en séparant la chambre de commande 138 de la chambre proximale 139.

L'embase proximale, formée à une extrémité proximale du piston 150, est opposée à la tête distale 151. L'embase proximale est disposée dans la chambre proximale 139.

La vanne 103 comprend avantageusement des dispositifs d'étanchéité 174, 175 et 176. Chaque dispositif d'étanchéité 174, 175 et 176 s'étend radialement entre le conduit 133 et le piston 150, pour séparer fluidiquement les chambres 125, 137, 138 et 139.

Le dispositif d'étanchéité 174, dit « dispositif d'étanchéité de piston », se présente ici sous la forme d'un joint racleur, fixé au corps 130 et glissant le long du piston 150. Le dispositif 174 entoure la tige 152 sur tout son pourtour, et est radialement interposé entre le piston 150 et le conduit 133. En particulier, le dispositif 174 relie radialement le piston 150 à l'extrémité distale de corps 131. Ici, le dispositif 174 est fixé à l'extrémité distale de corps 131, et la tige 152 du piston coulisse à l'intérieur du dispositif 174.

Le dispositif d'étanchéité 174 sépare fluidiquement la chambre 125 du conduit 133, qui sont adjacents au dispositif d'étanchéité 174. En particulier, le dispositif d'étanchéité 174 sépare les chambres 125 et 137, qui lui sont adjacentes. Le fluide pressurisé, ici le produit de revêtement, admis dans la chambre 125, est empêché de fuir vers la chambre intermédiaire 137, grâce au dispositif d'étanchéité 174.

Le dispositif d'étanchéité 175, dit « dispositif d'étanchéité de piston », se présente ici sous la forme d'un joint racleur, fixé au corps 130 et glissant le long du piston 150. Le dispositif 175 entoure le piston 150 sur tout son pourtour, et est radialement interposé entre le piston 150 et le corps 130, en particulier le conduit 133. En particulier, le dispositif 175 relie radialement la tige 152 à une partie du conduit 133 située à l'intersection entre la chambre intermédiaire 137 et la chambre de commande 138. Le dispositif d'étanchéité 175 sépare fluidiquement les chambres 137 et 138 du conduit 133, qui sont adjacents au dispositif d'étanchéité 175.

Le dispositif d'étanchéité 176, se présente ici sous la forme d'un joint racleur, fixé au piston 150 et glissant le long du corps 130. Le dispositif 176 entoure le piston 150 sur tout son pourtour, et est radialement interposé entre le piston 150 et le corps 130, en particulier le conduit 133. En particulier, le dispositif 176 relie radialement la collerette 155 à une partie du conduit 133 située à l'intersection entre la chambre de commande 138 et la chambre proximale 139. Le dispositif d'étanchéité 176 sépare fluidiquement les chambres 138 et 139 du conduit 133, qui sont adjacents au dispositif d'étanchéité 176.

La vanne 103 comprend avantageusement un ressort 154, représenté symboliquement, qui exerce un effort de rappel élastique E154 sur le piston 150, par l'intermédiaire de l'embase proximale, en prenant appui sur le corps 130. L'effort de rappel élastique E154 tend à déplacer le piston 150 de sa position d'ouverture à sa position de fermeture. De préférence, le ressort 154 est disposé dans la chambre proximale 139, de la même façon que le ressort 54.

Le conduit 123 et le chambre de commande 126 sont fluidiquement reliées à la chambre de commande 138 formée à l'intérieur du corps 130, via un ou plusieurs conduits (non représentés) ménagés à dans le corps 130 et reliant les chambres 126 et 138 lorsque la vanne 103 est montée. Le fluide de commande F123 peut donc envahir les chambres de commande 126 et 138, et ainsi exercer un effort de pression E138 sur la collerette 155 par mise en pression de la chambre 138, tendant à déplacer le piston 150 de la position de fermeture à la position d'ouverture. L'application de l'effort E38 permet donc de commander la vanne 103. Le fluide de commande reçu dans la chambre de commande 38 est empêché de fuir vers l'extérieur 124 grâce au dispositif d'étanchéité 176 et vers la chambre intermédiaire 137 grâce au dispositif d'étanchéité 175.

De préférence, la chambre périphérique 128 est fluidiquement reliée à la chambre intermédiaire 137, délimitée à l'intérieur du corps 130. Pour cela, le corps 130 ménage un ou plusieurs conduits (non représentés), reliant les chambres 128 et 137 lorsque la vanne 103 est montée sur la base 102.

La chambre intermédiaire 137, la chambre périphérique 128 et le ou les conduits qui relient ces deux chambres, constituent alors ensemble une chambre d'évent. En effet, en cas de défaillance de l'un des dispositifs d'étanchéité 171 ou 174, du fluide pressurisé, à savoir du produit de revêtement, en provenance de la chambre 125, fuit dans la chambre d'évent. En cas de défaillance du dispositif 171, ou de montage incorrect du corps 130 dans l'alésage 120, le produit de revêtement fuit dans la chambre 137, c'est-à-dire dans la chambre d'évent. En cas de défaillance du dispositif 174, le produit de revêtement fuit dans la chambre 128, c'est-à-dire dans la chambre d'évent. De même, en cas de défaillance de l'un des dispositifs d'étanchéité 172 et 175, du fluide pressurisé, à savoir du fluide de commande, en provenance de l'une des chambres de commande 126 et 138 fuit dans la chambre d'évent. En cas de défaillance du dispositif 175, le fluide de commande fuit dans la chambre 137 appartenant à la chambre d'évent. En cas de défaillance du dispositif 172, ou de montage incorrect du corps 130 dans l'alésage 120, le fluide de commande fuit dans la chambre 128 appartenant à la chambre d'évent.

Contrairement au mode de réalisation des figues 1 à 3, on prévoit pour l'appareil 101 qu'un orifice de réception 158, pour recevoir l'indicateur 8, est ménagé dans la base 102 plutôt que dans la vanne 103. L'orifice 158 débouche sur l'extérieur 124 et n'est pas coaxial avec l'axe X103. L'orifice de réception 158 est conçu pour fixement recevoir l'indicateur 8, le tube 80 étant fixement reçu dans l'orifice 158, de sorte à être fixement solidaire de la base 102. Pour fixer le tube 80, l'orifice de réception 158 porte un moyen de fixation secondaire 159, ici un filetage intérieur, coopérant avec le moyen de fixation primaire 88 du tube 80. L'ouverture de connexion 81 est dirigée vers le fond de l'orifice de réception 158 alors que l'ouverture externe 82 est dirigée vers l'extérieur 124, et émerge préférentiellement de la base 102, à l'extérieur 124.

La base 102 comprend avantageusement un conduit interne 160 traversant, qui relie le fond de l'orifice de réception 158 à la chambre périphérique 128, c'est-à-dire à la chambre d'évent. En cas de fuite de fluide pressurisé dans la chambre d'évent, la surpression occasionnée est transmise au témoin 90 via le conduit 160.

Pour ce mode de réalisation, un témoin de position 197 est monté sur l'embase proximale du piston 150, et est visible depuis l'extérieur de la vanne 103 pour indiquer la position courant du piston 150 à une personne. Pour ce mode de réalisation, le témoin 197 est donc distinct de l'indicateur 8.

Toute caractéristique décrite ci-avant pour l'un des modes de réalisation ou variante peut être mise en œuvre pour les autres modes de réalisation et variantes décrits ci-avant, pour autant que techniquement possible.

## Revendications

1. Indicateur (8), pour indiquer la survenance d'une fuite de fluide pressurisé dans une chambre d'évent (28, 37; 128, 137) d'un appareil à fluide pressurisé (1; 101), l'indicateur (8) comprenant :
- un tube de support (80), comprenant :
• une ouverture de connexion (81), configurée pour être fluidiquement connectée à la chambre d'évent (28, 37; 128, 137) de l'appareil à fluide pressurisé (1; 101), et
• une ouverture externe (82), configurée pour déboucher sur un extérieur (24; 124) vis-à-vis de l'appareil à fluide pressurisé (1; 101) ;
- un témoin (90), agencé dans le tube de support (80) et mobile par rapport au tube de support (80), entre une position initiale et une position de signalement, sous l'effet d'une surpression survenant à l'ouverture de connexion (81), comparativement à l'ouverture externe (82), le témoin (90) étant positionné plus loin de l'ouverture de connexion (81) dans la position de signalement que dans la position initiale, pour indiquer la survenance de la fuite de fluide pressurisé dans la chambre d'évent (28, 37; 128, 137) lorsque le témoin (90) est en position de signalement ; et
- des éléments de verrouillage (84, 94), pour verrouiller mécaniquement le témoin (90) en position par rapport au tube de support (80), lorsque le témoin (90) est en position de signalement ;
**caractérisé en ce que** les éléments de verrouillage (84, 94) comprennent une portion de paroi interne du tube de support (80) et une portion de paroi externe du témoin (90), la portion de paroi interne et la portion de paroi externe étant conformées de sorte que la portion de paroi externe soit accueillie en engagement conique dans la portion de paroi interne lorsque le témoin (90) est dans la position de signalement, pour ainsi verrouiller le témoin (90) dans la position de signalement.

2. Indicateur (8) selon la revendication 1, dans lequel le témoin (90) comprend une extrémité de signalement (91) qui :
- dépasse hors de l'ouverture externe (82) lorsque le témoin (90) est dans la position de signalement, pour indiquer la survenance de la fuite ; et
- est au moins partiellement escamotée dans l'ouverture externe (82) lorsque le témoin (90) est dans la position initiale, pour indiquer une absence de fuite de fluide pressurisé dans la chambre d'évent (28, 37; 128, 137).

3. Indicateur (8) selon l'une quelconque des revendications précédentes, dans lequel le témoin (90) est conformé pour obturer le tube de support (80) et ainsi empêcher une fuite de fluide pressurisé depuis l'ouverture de connexion (81) jusqu'à l'ouverture externe (82), au moins lorsque le témoin (90) est dans la position de signalement, de préférence aussi lorsque le témoin (90) est dans la position initiale.

4. Indicateur (8) selon l'une quelconque des revendications précédentes, dans lequel :
- le tube de support (80) comprend une surface axiale primaire (83) tournée en direction de l'ouverture de connexion (81) et disposée à l'intérieur du le tube de support (80), entre l'ouverture externe (82) et l'ouverture de connexion (81) ; et
- le témoin (90) comprend une surface axiale secondaire (93) tournée en direction de la surface axiale primaire (83), pour que le témoin (90) vienne en butée contre le tube de support (80) lorsque le témoin (90) est en position de signalement, par mise en butée de la surface axiale secondaire (93) contre la surface axiale primaire (83).

5. Indicateur (8) selon l'une quelconque des revendications précédentes, dans lequel le tube de support (80) comprend un moyen de fixation primaire (88), de préférence un filetage extérieur, pour que l'indicateur (8) puisse être fixement reçu dans un orifice de réception (58; 158) de l'appareil à fluide pressurisé (1; 101).

6. Appareil à fluide pressurisé (1; 101), comprenant :
- l'indicateur (8) selon l'une quelconque des revendications précédentes, l'ouverture externe (82) de l'indicateur (8) débouchant sur l'extérieur (24; 124) ;
- la chambre d'évent (28, 37; 128, 137), l'ouverture de connexion (81) de l'indicateur (8) étant fluidiquement connectée à la chambre d'évent (28, 37; 128, 137) ;
- au moins une chambre de fluide pressurisé (25, 26, 38; 125, 128, 138) ; et
- au moins un dispositif d'étanchéité (71, 72, 74, 75; 171, 172, 174, 175), séparant fluidiquement la chambre d'évent (28, 37; 128, 137) vis-à-vis de ladite au moins une chambre de fluide pressurisé (25, 26, 38; 125, 128, 138).

7. Appareil à fluide pressurisé (1; 101) selon la revendication 6, dans lequel l'appareil à fluide pressurisé (1; 101) comprend une vanne (3; 103), fluidiquement connectée avec la chambre d'évent (28, 37; 128, 137) ou formant tout ou partie de la chambre d'évent (28, 37; 128, 137), et comprenant :
- un corps (30; 130), présentant une extrémité distale de corps (31; 131) et formant un conduit central (33; 133), coaxialement traversé par un axe central (X3; X103), le conduit central (33; 133) présentant une extrémité distale de conduit (36; 136) qui débouche à l'extrémité distale de corps (31; 131) ; et
- un piston (50; 150), reçu dans le conduit central (33; 133) et configuré pour coulisser par rapport au corps (30; 130) suivant l'axe central (X3; X103) et émergeant hors du conduit central (33; 133) à l'extrémité distale de conduit (36; 136).

8. Appareil à fluide pressurisé (1; 101) selon la revendication 7, dans lequel :
- le conduit central (33; 133) comprend une chambre intermédiaire (37; 137) qui est fluidiquement connectée à la chambre d'évent (28, 37; 128, 137) ou qui forme tout ou partie de la chambre d'évent (28, 37; 128, 137) ; et
- ledit au moins un dispositif d'étanchéité (71, 72, 74, 75; 171, 172, 174, 175) comprend au moins un dispositif d'étanchéité de piston (74, 75; 174, 175), appartenant à la vanne (3; 103), le dispositif d'étanchéité de piston (74, 75 ; 174, 175) reliant radialement le piston (50; 150) au corps (30; 130), de sorte que le dispositif d'étanchéité de piston (74, 75 ; 174, 175) sépare la chambre intermédiaire (37; 137) vis-à-vis de ladite au moins une chambre de fluide pressurisé (25, 26, 38; 125, 128, 138).

9. Appareil à fluide pressurisé (1; 101) selon l'une quelconque des revendications 7 ou 8, dans lequel :
- l'appareil à fluide pressurisé (1; 101) comprend une base (2; 102), comprenant un alésage (20; 120) dans lequel le corps (30; 130) est reçu et est fixement attaché, pour former :
• ladite au moins une chambre de fluide pressurisé (25, 26, 38; 125, 128, 138), délimitée par l'alésage (20; 120) et la vanne (3; 103), et
• une chambre périphérique (28; 128), délimitée par l'alésage (20; 120) et le corps (30; 130), radialement vis-à-vis de l'axe central (X3; X103), la chambre périphérique (28; 128) étant adjacente à la chambre de fluide pressurisé (25, 26, 38; 125, 128, 138) et étant fluidiquement connectée à la chambre d'évent (28, 37; 128, 137) ou formant tout ou partie de la chambre d'évent (28, 37; 128, 137) ; et
- ledit au moins un dispositif d'étanchéité (71, 72, 74, 75; 171, 172, 174, 175) comprend un dispositif d'étanchéité de corps (71, 72; 171, 172), interposé entre le corps (30; 130) et la base (2; 102), de sorte que le dispositif d'étanchéité de corps (71, 72; 171, 172) sépare la chambre périphérique (28; 128) vis-à-vis de ladite au moins une chambre de fluide pressurisé (25, 26, 38; 125, 128, 138).

10. Appareil à fluide pressurisé (101) selon la revendication 9, dans lequel l'indicateur (8) est monté dans la base (102), avec le tube de support (80) fixement attaché à la base (102).

11. Appareil à fluide pressurisé (1) selon l'une quelconque des revendications 7 à 9, dans lequel l'indicateur (8) est monté sur la vanne (3), avec le tube de support (80) fixement attaché à la vanne (3).

12. Appareil à fluide pressurisé (1) selon la revendication 11, dans lequel l'indicateur (8) est monté sur le piston (50), avec le tube de support (80) fixement attaché à une embase proximale (53) appartenant au piston (50), l'embase proximale (53) étant opposée à l'extrémité distale de corps (31), de sorte que l'indicateur (8) soit visible depuis l'extérieur (24) pour au moins une position du piston (50) par rapport au corps (30) et de sorte que la position de l'indicateur (8) par rapport au corps (30) reflète la position du piston (50).

13. Appareil à fluide pressurisé (1; 101) selon l'une quelconque des revendications 6 à 12, dans lequel :
- l'appareil à fluide pressurisé (1; 101) est un appareil d'application de produit de revêtement ; et
- le fluide pressurisé comprend le produit de revêtement et/ou un fluide de commande de vanne.

14. Appareil à fluide pressurisé (1) selon l'une quelconque des revendications 6 à 13, dans lequel :
- l'indicateur (8) comprend un capteur (99) dont un état reflète la position courante du témoin (90) par rapport au tube de support (80) ; et
- l'appareil à fluide pressurisé (1) comprend une unité électronique de surveillance (98) à laquelle le capteur (99) est relié, et qui est configurée pour émettre une alerte à l'attention d'une personne lorsque l'état du capteur (99) reflète que le témoin (90) est en position de signalement.

## Patentansprüche

1. Anzeiger (8) zum Anzeigen eines Auftretens eines Lecks von unter Druck stehendem Fluid in einer Entlüftungskammer (28, 37; 128, 137) einer Vorrichtung mit unter Druck stehendem Fluid (1; 101), der Anzeiger (8) umfassend:
- ein Trägerrohr (80), umfassend:
• eine Verbindungsöffnung (81), die konfiguriert ist, um fluidisch mit der Entlüftungskammer (28, 37; 128, 137) der Vorrichtung mit unter Druck stehendem Fluid (1 ; 101) verbunden zu sein, und
• eine äußere Öffnung (82), die konfiguriert ist, um gegenüber der Vorrichtung mit unter Druck stehendem Fluid (1 ; 101) zu einem Äußeren (24; 124) zu münden;
- eine Anzeige (90), die in dem Trägerrohr (80) angeordnet ist und in Bezug auf das Trägerrohr (80) zwischen einer Ausgangsposition und einer Meldeposition unter Wirkung eines Überdrucks, der beim Öffnen der Verbindungsöffnung (81) im Vergleich zu der äußeren Öffnung (82) auftritt, bewegbar ist, wobei die Anzeige (90) in der Meldeposition weiter von der Verbindungsöffnung (81) entfernt positioniert ist als in der Ausgangsposition, um das Auftreten eines Lecks von unter Druck stehendem Fluid in der Entlüftungskammer (28, 37; 128, 137) anzuzeigen, wenn die Anzeige (90) in der Meldeposition ist; und
- Verriegelungselemente (84, 94) zum mechanischen Verriegeln der Anzeige (90) in ihrer Position in Bezug auf das Trägerrohr (80), wenn die Anzeige (90) in der Meldeposition ist;
**dadurch gekennzeichnet, dass** die Verriegelungselemente (84, 94) einen Innenwandabschnitt des Trägerrohrs (80) und einen Außenwandabschnitt der Anzeige (90) umfassen, wobei der Innenwandabschnitt und der Außenwandabschnitt geformt sind, sodass der Außenwandabschnitt in konischem Eingriff in den Innenwandabschnitt aufgenommen ist, wenn die Anzeige (90) in der Meldeposition ist, um die Anzeige (90) in der Meldeposition zu verriegeln.

2. Anzeiger (8) nach Anspruch 1, wobei die Anzeige (90) ein Meldeende (91) aufweist, das:
- aus der äußeren Öffnung (82) hervorsteht, wenn die Anzeige (90) in der Meldeposition ist, um das Auftreten des Lecks anzuzeigen; und
- zumindest teilweise in die äußere Öffnung (82) eingezogen ist, wenn die Anzeige (90) in der Ausgangsposition ist, um anzuzeigen, dass kein unter Druck stehendes Fluid aus der Entlüftungskammer (28, 37; 128, 137) austritt.

3. Anzeiger (8) nach einem der vorherigen Ansprüche, wobei die Anzeige (90) geformt ist, um das Trägerrohr (80) zu verschließen und dadurch ein Austreten von unter Druck stehendem Fluid aus der Verbindungsöffnung (81) zu der äußeren Öffnung (82) zumindest dann zu verhindern, wenn die Anzeige (90) in der Meldeposition ist, vorzugsweise auch, wenn die Anzeige (90) in der Ausgangsposition ist.

4. Anzeiger (8) nach einem der vorherigen Ansprüche, wobei:
- das Trägerrohr (80) eine primäre axiale Oberfläche (83) aufweist, die in Richtung der Verbindungsöffnung (81) gerichtet ist und zwischen der äußeren Öffnung (82) und der Verbindungsöffnung (81) innerhalb des Trägerrohrs (80) angeordnet ist; und
- die Anzeige (90) eine sekundäre axiale Oberfläche (93) umfasst, die in Richtung der primären axialen Oberfläche (83) gewandt ist, damit die Anzeige (90) an dem Trägerrohr (80) anliegt, wenn die Anzeige (90) in der Meldeposition ist, indem die sekundäre axiale Oberfläche (93) an der primären axialen Oberfläche (83) anliegt.

5. Anzeiger (8) nach einem der vorherigen Ansprüche, wobei das Trägerrohr (80) ein primäres Befestigungselement (88), vorzugsweise ein Außengewinde, aufweist, sodass der Anzeiger (8) formschlüssig in einer Aufnahmeöffnung (58; 158) der Vorrichtung mit unter Druck stehendem Fluid (1 ; 101) eingesetzt werden kann.

6. Vorrichtung mit unter Druck stehendem Fluid (1 ; 101), umfassend:
- den Anzeiger (8) nach einem der vorherigen Ansprüche, wobei die äußere Öffnung (82) des Anzeigers (8) zu einem Äußeren (24; 124) mündet;
- die Entlüftungskammer (28, 37; 128, 137), wobei die Verbindungsöffnung (81) des Anzeigers (8) fluidisch mit der Entlüftungskammer (28, 37; 128, 137) verbunden ist;
- mindestens eine Kammer für unter Druck stehendes Fluid (25, 26, 38; 125, 128, 138); und
- mindestens eine Dichtungsvorrichtung (71, 72, 74, 75; 171, 172, 174, 175), die die Entlüftungskammer (28, 37; 128, 137) fluidisch von mindestens einer Kammer für unter Druck stehendes Fluid (25, 26, 38; 125, 128, 138) trennt.

7. Vorrichtung mit unter Druck stehendem Fluid (1 ; 101) nach Anspruch 6, wobei die Vorrichtung mit unter Druck stehendem Fluid (1 ; 101) ein Ventil (3; 103) umfasst, das fluidisch mit der Entlüftungskammer (28, 37; 128, 137) verbunden ist oder die Entlüftungskammer (28, 37; 128, 137) ganz oder teilweise bildet, und umfassend:
- einen Körper (30; 130), der ein distales Körperende (31; 131) aufweist und einen mittleren Kanal (33; 133) bildet, der koaxial von einer mittleren Achse (X3; X103) durchquert wird, wobei der mittlere Kanal (33; 133) ein distales Kanalende (36; 136) aufweist, das an dem distalen Körperende (31; 131) mündet; und
- ein Kolben (50; 150), der in dem mittleren Kanal (33; 133) aufgenommen und konfiguriert ist, um in Bezug auf den Körper (30; 130) entlang der mittleren Achse (X3; X103) zu gleiten und an dem distalen Kanalende (36; 136) aus dem mittleren Kanal (33; 133) hervorzustehen.

8. Vorrichtung mit unter Druck stehendem Fluid (1 ; 101) nach Anspruch 7, wobei:
- der mittlere Kanal (33; 133) eine Zwischenkammer (37; 137) umfasst, die fluidisch mit der Entlüftungskammer (28, 37; 128, 137) verbunden ist oder ganz oder teilweise die Entlüftungskammer (28, 37; 128, 137) bildet; und
- die mindestens eine Dichtungsvorrichtung (71, 72, 74, 75; 171, 172, 174, 175) mindestens eine Kolbendichtungsvorrichtung (74, 75; 174, 175) umfasst, die zu dem Ventil (3; 103) gehört, wobei die Kolbendichtungsvorrichtung (74, 75; 174, 175) den Kolben (50; 150) radial mit dem Körper (30; 130) verbindet, sodass die Kolbendichtungsvorrichtung (74, 75; 174, 175) die Zwischenkammer (37; 137) von der mindestens einen Kammer für unter Druck stehendes Fluid (25, 26, 38; 125, 128, 138) trennt.

9. Vorrichtung mit unter Druck stehendem Fluid (1 ; 101) nach einem der Ansprüche 7 oder 8, wobei:
- die Vorrichtung mit unter Druck stehendem Fluid (1 ; 101) eine Basis (2; 102) umfasst, umfassend eine Bohrung (20; 120), in der der Körper (30; 130) aufgenommen und fest angebracht ist, um Folgendes zu bilden:
• die mindestens eine Kammer für unter Druck stehendes Fluid (25, 26, 38; 125, 128, 138), die von der Bohrung (20; 120) und dem Ventil (3; 103) begrenzt ist, und
• eine periphere Kammer (28; 128), die durch die Bohrung (20; 120) und den Körper (30; 130) radial gegenüber der Mittelachse (X3; X103) begrenzt ist, wobei periphere Kammer (28; 128) angrenzend an die Kammer für unter Druck stehendes Fluid (25, 26, 38; 125, 128, 138) ist und fluidisch mit der Entlüftungskammer (28, 37; 128, 137) verbunden ist oder die Entlüftungskammer (28, 37; 128, 137) ganz oder teilweise bildet; und
- wobei die mindestens eine Dichtungsvorrichtung (71, 72, 74, 75; 171, 172, 174, 175) eine Körperdichtungsvorrichtung (71, 72; 171, 172) umfasst, die zwischen dem Körper (30; 130) und der Basis (2; 102) angeordnet ist, sodass die Körperdichtungsvorrichtung (71, 72; 171, 172) die periphere Kammer (28; 128) von der mindestens einen Kammer für unter Druck stehendes Fluid (25, 26, 38; 125, 128, 138) trennt.

10. Vorrichtung mit unter Druck stehendem Fluid (101) nach Anspruch 9, wobei der Anzeiger (8) in der Basis (102) montiert ist, wobei das Trägerrohr (80) fest an der Basis (102) angebracht ist.

11. Vorrichtung für ein unter Druck stehendes Fluid (1) nach einem der Ansprüche 7 bis 9, wobei der Anzeiger (8) an dem Ventil (3) montiert ist und das Trägerrohr (80) fest an dem Ventil (3) angebracht ist.

12. Vorrichtung mit unter Druck stehendem Fluid (1) nach Anspruch 11, wobei der Anzeiger (8) an dem Kolben (50) montiert ist, wobei das Trägerrohr (80) fest an einem proximalen Ansatz (53) angebracht ist, der zu dem Kolben (50) gehört, wobei der proximale Ansatz (53) gegenüber dem distalen Ende des Körpers (31) ist, sodass der Anzeiger (8) für mindestens eine Position des Kolbens (50) in Bezug auf den Körper (30) von außen (24) sichtbar ist und sodass die Position des Anzeigers (8) in Bezug auf den Körper (30) die Position des Kolbens (50) widerspiegelt.

13. Vorrichtung mit unter Druck stehendem Fluid (1 ; 101) nach einem der Ansprüche 6 bis 12, wobei:
- die Vorrichtung mit unter Druck stehendem Fluid (1 ; 101) eine Vorrichtung zum Auftragen von Beschichtungsprodukt ist; und
- das unter Druck stehende Fluid das Beschichtungsprodukt und/oder ein Ventilsteuerfluid umfasst.

14. Vorrichtung mit unter Druck stehendem Fluid (1) nach einem der Ansprüche 6 bis 13, wobei:
- der Anzeiger (8) einen Geber (99) umfasst, dessen Zustand die aktuelle Position der Anzeige (90) in Bezug auf das Trägerrohr (80) widerspiegelt; und
- die Vorrichtung mit unter Druck stehendem Fluid (1) eine elektronische Überwachungseinheit (98) umfasst, mit der der Geber (99) verbunden ist und die konfiguriert ist, um eine Warnung an eine Person auszugeben, wenn der Zustand des Gebers (99) widerspiegelt, dass die Anzeige (90) in der Meldeposition ist.

## Claims

1. An indicator (8), for indicating an occurrence of a leak of pressurized fluid in a vent chamber (28, 37; 128, 137) of a pressurized fluid apparatus (1; 101), the indicator (8) comprising:
- a support tube (80), comprising:
• a connection opening (81), configured to be fluidically connected to the vent chamber (28, 37; 128, 137) of the pressurized fluid apparatus (1; 101), and
• an external opening (82), configured to open out to an outside (24; 124) of the pressurized fluid apparatus (1; 101);
- a poppet (90), arranged in the support tube (80) and movable with respect to the support tube (80), between an initial position and a signaling position, under the effect of an overpressure occurring at the connection opening (81), compared with the external opening (82), the poppet (90) being positioned further away from the connection opening (81) in the signaling position than in the initial position, to indicate the occurrence of the leak of pressurized fluid into the vent chamber (28, 37; 128, 137) when the poppet (90) is in the signaling position,
- wherein the indicator (8) comprises locking elements (84, 94) for mechanically locking the poppet (90) in position with respect to the support tube (80) when the poppet (90) is in the signaling position;
**characterized in that** the locking elements (84, 94) comprise an inner wall portion of the support tube (80) and an external wall portion of the poppet (90), the internal wall portion and the external wall portion being shaped such that the external wall portion is received in conical engagement in the internal wall portion when the poppet (90) is in the signaling position, so as to thereby lock the poppet (90) in the signaling position.

2. The indicator (8) according to claim 1, wherein the poppet (90) comprises a signaling end (91) that:
- protrudes out of the external opening (82) when the poppet (90) is in the signaling position, to indicate the occurrence of the leak; and
- is at least partially retracted into the external opening (82) when the poppet (90) is in the initial position, to indicate an absence of leak of pressurized fluid into the vent chamber (28, 37; 128, 137).

3. The indicator (8) according to any of the preceding claims, wherein the poppet (90) is shaped for closing the support tube (80) and thereby preventing any leak of pressurized fluid from the connection opening (81) to the external opening (82), at least when the poppet (90) is in the signaling position, preferentially also when the poppet (90) is in the initial position.

4. The indicator (8) according to any of the preceding claims, wherein:
- the support tube (80) comprises a primary axial surface (83) oriented towards the connection opening (81) and arranged inside the support tube (80), between the external opening (82) and the connection opening (81); and
- the poppet (90) comprises a secondary axial surface (93) oriented towards the primary axial surface (83), so that the poppet (90) abuts against the support tube (80) when the poppet (90) is in the signaling position, by abutting the secondary axial surface (93) against the primary axial surface (83).

5. The indicator (8) according to any of the preceding claims, wherein the support tube (80) comprises a primary means of attachment (88), preferentially an external thread, for the indicator (8) to be fixedly received in a receiving port (58; 158) of the pressurized fluid apparatus (1; 101).

6. A pressurized fluid apparatus (1; 101), comprising:
- the indicator (8) according to any of the preceding claims, wherein the external opening (82) of the indicator (8) comes out to the outside (24; 124);
- the vent chamber (28, 37; 128, 137), the connection opening (81) of the indicator (8) being fluidically connected to the vent chamber (28, 37; 128, 137);
- at least one pressurized fluid chamber (25, 26, 38; 125, 128, 138); and
- at least one sealing device (71, 72, 74, 75; 171, 172, 174, 175), fluidically separating the vent chamber (28, 37; 128, 137) from the at least one pressurized fluid chamber (25, 26, 38; 125, 128, 138).

7. The pressurized fluid apparatus (1; 101) according to claim 6, wherein the pressurized fluid apparatus (1; 101) comprises a valve (3; 103) fluidically connected to the vent chamber (28, 37; 128, 137) or forming all or part of the vent chamber (28, 37; 128, 137), and comprising:
- a body (30; 130), having a body distal end (31; 131) and forming a central channel (33; 133), coaxially letting though a central axis (X3; X103), the central channel (33; 133) having a channel distal end (36; 136) which comes out at the body distal end (31; 131); and
- a piston (50; 150), received in the central channel (33; 133) and configured to slide with respect to the body (30; 130) along the central axis (X3; X103) and emerging out of the central channel (33; 133) at the distal end of the channel (36; 136).

8. The pressurized fluid apparatus (1; 101) according to claim 7, wherein:
- the central channel (33; 133) comprises an intermediate chamber (37; 137) which is fluidically connected to the vent chamber (28, 37; 128, 137) or which forms all or part of the vent chamber (28, 37; 128, 137); and
- the at least one sealing device (71, 72, 74, 75; 171, 172, 174, 175) comprises at least one piston sealing device (74, 75; 174, 175), belonging to the valve (3; 103), the piston sealing device (74, 75; 174, 175) radially connecting the piston (50; 150) to the body (30; 130), so that the piston sealing device (74, 75; 174, 175) separates the intermediate chamber (37; 137) with respect to the at least one pressurized fluid chamber (25, 26, 38; 125, 128, 138).

9. The pressurized fluid apparatus (1; 101) according to any of claims 7 or 8, wherein:
- the pressurized fluid apparatus (1; 101) comprises a base (2; 102), comprising a bore (20; 120) wherein the body (30; 130) is received and fixedly attached, to form:
• the at least one pressurized fluid chamber (25, 26, 38; 125, 128, 138), delimited by the bore (20; 120) and the valve (3; 103), and
• a peripheral chamber (28; 128), defined by the bore (20; 120) and the body (30; 130), radially with respect to the central axis (X3; X103), the peripheral chamber (28; 128) being adjacent to the pressurized fluid chamber (25, 26, 38; 125, 128, 138) and being fluidically connected to the vent chamber (28, 37; 128, 137) or forming all or part of the vent chamber (28, 37; 128, 137); and
- the at least one sealing device (71, 72, 74, 75; 171, 172, 174, 175) comprises a body seal (71, 72; 171, 172) interposed between the body (30; 130) and the base (2; 102) such that the body sealing device (71, 72; 171, 172) separates the peripheral chamber (28; 128) with respect to said at least one pressurized fluid chamber (25, 26, 38; 125, 128, 138).

10. The pressurized fluid apparatus (101) according to claim 9, wherein the indicator (8) is mounted in the base (102), with the support tube (80) fixedly attached to the base (102).

11. The pressurized fluid apparatus (1) according to any one of the claims 7 to 9, wherein the indicator (8) is mounted on the valve (3), with the support tube (80) fixedly attached to the valve (3).

12. The pressurized fluid apparatus (1) according to claim 11, wherein the indicator (8) is mounted on the piston (50), with the support tube (80) fixedly attached to a proximal baseplate (53) belonging to the piston (50), the proximal baseplate (53) being opposite the distal end of the body (31), such that the indicator (8) is visible from the outside (24) for at least one position of the piston (50) with respect to the body (30) and such that the position of the indicator (8) with respect to the body (30) reflects the position of the piston (50).

13. The pressurized fluid apparatus (1; 101) according to any of claims 6 to 12, wherein:
- the pressurized fluid apparatus (1; 101) is an apparatus for applying a coating product; and
- the pressurized fluid comprises the coating product and/or a valve command fluid.

14. The pressurized fluid apparatus (1) according to any of claims 6 to 13, wherein:
- the indicator (8) comprises a sensor (99), a state of which reflects the current position of the poppet (90) with respect to the support tube (80); and
- the pressurized fluid apparatus (1) comprises an electronic monitoring unit (98) to which the sensor (99) is connected, and which is configured to issue an alert for the attention of a person when the state of the sensor (99) reflects that the poppet (90) is in the signaling position.
